Europäisches Patentamt

European Patent Office

Office européen des brevets

(19)

(11) **EP 0 798 330 A2**

(12) **EUROPÄISCHE PATENTANMELDUNG**

(43) Veröffentlichungstag:
01.10.1997 Patentblatt 1997/40

(51) Int. Cl.⁶: **C08G 75/02**

(21) Anmeldenummer: 97200711.6

(22) Anmeldetag: 13.03.1997

(84) Benannte Vertragsstaaten:
**DE FR GB IT**

(30) Priorität: **25.03.1996 DE 19611681**

(71) Anmelder: **HOECHST AKTIENGESELLSCHAFT**
**65929 Frankfurt am Main (DE)**

(72) Erfinder:
- **Haubs, Michael, Dr.**
 **55545 Bad Kreuznach (DE)**
- **Wagener, Reinhard, Dr.**
 **65439 Flörsheim (DE)**

(54) **Verfahren zur Herstellung von aromatischen schwefelhaltigen Polymeren**

(57)  Bei dem Verfahren zur Herstellung von aromatischen schwefelhaltigen Polymeren wird das Polymer aus einem Präpolymer mit Halogen-Endgruppen gebildet. Zur Herstellung der Präpolymere wird im Reaktionsgemisch ein Laugenäquivalent und ein Schwefeläquivalent im Verhältnis von 0,5 bis einschließlich 1 eingesetzt. Das zweistufige Verfahren eignet sich besonders zur Herstellung von Polyphenylensulfid.

EP 0 798 330 A2

**Beschreibung**

Die Erfindung betrifft ein Verfahren zur Herstellung von linearen oder verzweigten aromatischen schwefelhaltigen Polymeren wie Polyarylensulfiden, insbesondere von Polyphenylensulfid (PPS).

Aromatische schwefelhaltige Polymere, insbesondere Polyarylensulfide und Polyphenylensulfid (PPS), zeichnen sich durch außergewöhnliche Temperaturstabilität und hervorragende Chemikalienbeständigkeit aus und sind daher für technische Anwendungen sehr interessant.

Die Herstellung von PPS wird beispielsweise in US 4,910,294 beschrieben und erfolgt danach aus Phenylendihalogeniden, insbesondere Dichlorbenzol (DCB), und Natriumsulfid in einem hochsiedenden, dipolar aprotischen Lösungsmittel wie Methylpyrrolidon (NMP). Die Reaktionstemperaturen liegen bei 220 °C bis 270 °C, die Reaktionszeiten bei 5-12 h. Jedoch ist es nicht ohne weiteres möglich, für technische Anwendungen genügend hohe Molmassen zu erreichen. Man hilft sich damit, daß die Polymeren einem "Vernetzungsprozeß (curing)" unterzogen werden oder mit der Zugabe von trifunktionellen Comonomeren, wie Trichlorbenzol zum Reaktionsansatz. Die Polymere sind dann aber verzweigt, was für die Anwendung oft Nachteile mit sich bringt, weil z.B. die Zähigkeit herabgesetzt wird.

Eine weitere Möglichkeit, hohe Molekulargewichte zu erzielen, besteht in der Zugabe von Wasser in einer zweiten Reaktionsstufe und Erhitzen der Reaktionsmischung auf 260 °C. Dies kann auch in einem Zweistufenprozeß erfolgen (EP 0256757, EP 0259984, US 4,794,164), jedoch müssen hier große Mengen an Wasser zugesetzt werden (6 bis 15 mol Wasser pro kg Lösungsmittel), so daß sich ein Zweiphasensystem ausbildet. Diese Verfahren haben jedoch den Nachteil, daß lange Reaktionszeiten erforderlich sind, das Lösungsmittel sich teilweise zersetzt (Bildung von Methylamin) und außerdem weitere unerwünschte Nebenprodukte gebildet werden.

Die Isolierung und Reinigung der Polymeren ist ebenfalls nur unbefriedigend gelöst, da das reichlich mitanfallende Salz zum Teil vom Polymeren eingeschlossen wird und sich nur durch umfangreiche Waschoperationen entfernen läßt. Zur Entfernung von leichtflüchtigen Verunreinigungen, die beim Schmelzextrudieren sehr stören, muß entweder mit großen Mengen an organischen Lösungsmitteln aufwendig gewaschen werden, oder das isolierte Polymere muß bei erhöhter Temperatur vernetzt werden, was der Reinheit des Polymeren sehr abträglich ist. In jedem Fall ist die Entfernung der flüchtigen Verunreinigungen recht unvollständig. Dies äußert sich auch darin, daß unerwünschte Komponenten beim Schmelzextrudieren, speziell beim Faserspinnen, an die Außenwelt abgegeben werden.

EP-A-0527055 beschreibt die Herstellung von hochmolekularem PPS durch ringöffnende Polymerisation von cyclischen PPS-Oligomeren. Es ist jedoch schwierig, größere Mengen an PPS so herzustellen, da sich cyclische Oligomere nicht einfach in guter Ausbeute herstellen lassen.

US 4 786 711 beschreibt Reaktionsbedingungen zur Herstellung von leichtfließendem, niedermolekularem PPS, wobei Alkalimetallhydroxid zu Alkalimetallhydrogensulfid im molaren Verhältnis von 0,8 bis 0,98 in der Reaktionsmischung vorliegen.

Auch die Stabilität der Schmelzeviskosität (Schmelzestabilität) der Polymere ist nach dem Stand der Technik wenig befriedigend, so daß Stabilisatoren in unterschiedlichen Mengen zugesetzt werden.

Schließlich müssen große Mengen an Lösungsmitteln zurückgewonnen und durch Destillation gereinigt werden, was die Aufarbeitung des Polymeren sehr kostspielig macht. Insgesamt gesehen, ist die Herstellung von hochmolekularem, reinem PPS nach dem Stand der Technik zeitraubend, die Isolierung und Reinigung des Polymeren aufwendig und teuer und die Polymerqualität verbesserungswürdig.

Es bestand daher die Aufgabe, die genannten Nachteile zu vermeiden.

Gegenstand der Erfindung ist ein Verfahren zur Herstellung eines aromatischen schwefelhaltigen Polymeren, bei dem in einem ersten Schritt in mindestens einem Lösungsmittel ein Präpolymer aus A) mindestens einem aromatischen dihalogenierten Kohlenwasserstoff und B) mindestens einem Sulfid eines Alkali- oder Erdalkalimetalls oder dessen Hydraten hergestellt wird, das halogenterminierte Gruppen enthält, wobei in dem Reaktionsgemisch ein Verhältnis von Laugenäquivalent zu Schwefeläquivalent von 0,5 bis 1 zu 1 besteht, das Präpolymere isoliert wird und in einem zweiten Schritt unter Zugabe einer geringen Menge der Komponente B) in homogener Lösung das Polymer gebildet wird.

Bei dem Verfahren werden halogenterminierte Oligomere oder Polymere, die Arylensulfid-Einheiten enthalten, hergestellt und diese Produkte, das sogenannte Präpolymer, durch Reaktion mit Sulfid oder einer äqivalenten Schwefelverbindung zu einem schwefelhaltigen Polymer mit höherer Molmasse als das Präpolymer umgesetzt. Es ist auch möglich, das Verfahren einstufig zu gestalten, in dem das Präpolymere nicht erst hergestellt wird, sondern daß bei der Herstellung des Polymeres mit höherer Molmasse bereits von einem halogenterminierten Präpolymeren ausgegangen wird. Die erhaltenen aromatischen schwefelhaltigen Polymere, insbesondere Polyarylensulfide in einem breiten Molmassenbereich (z.B. $M_n$ 5000 bis 100000 g/mol) können bei kurzen Reaktionszeiten in guter Reinheit hergestellt werden, wobei auch der Aufwand zur Polymerisolierung und Lösungsmittelrückgewinnung klein ist.

Unter Laugenäquivalent, abgekürzt EQL, wird folgende Größe verstanden:

$$EQL = n(Sulfid) + n(Hydroxid) - n(Säure).$$

Hierbei bedeuten:

n(Sulfid):   die eingesetzte molare Menge an Sulfid,
n(Hydroxid):   die eingesetzte molare Menge an Hydroxid,
n(Säure):   die eingesetzte molare Menge an zugesetzten Protonensäuren-Äquivalenten.

Die Menge an Protonensäuren-Äquivalente entspricht der Masse der eingesetzten Säure dividiert durch das Äquivalentgewicht. Beispielsweise gilt für die zweibasige Schwefelsäure n(Säure)=Masse der Schwefelsäure / 49 gmol$^{-1}$. Das Protonensäuren-Äquivalent richtet sich nach der Anzahl der aktiven Protonen. Daher ist für Schwefelwasserstoff das Äquivalentgewicht 34 gmol$^{-1}$.

Unter Schwefeläquivalent, abgekürzt EQS, wird folgende Größe verstanden:

$$EQS = n(Sulfid) + n(Hydrogensulfid) + n(Schwefelwasserstoff)$$

Hierbei bedeuten:

n(Sulfid):   die eingesetzte molare Menge an Sulfid,
n(Hydrogensulfid):   die eingesetzte molare Menge an Hydrogensulfid,
n(Schwefelwasserstoff):   die eingesetzte molare Menge an zugesetzten Schwefelwasserstoff.

Vorteilhaft wird bei dem Verfahren in einer ersten Stufe ein Präpolymer mit Halogen-Endgruppen hergestellt und isoliert und in einer zweiten Stufe das Präpolymer durch Reaktion mit einer Schwefelverbindung zu einem Polymer mit höherer Molmasse umgesetzt.

Schwefelhaltige Polymere sind Polymere, die Arylensulfid-Einheiten enthalten. Die Arylen-Bestandteile der Arylensulfid-Einheiten enthalten ein- oder mehrkernige Aromaten oder verbundene Aromaten. Die Aromaten können auch Heteroatome enthalten. Solche Aromaten, die substituiert oder unsubstituiert sein können, sind beispielsweise Benzol, Pyridin, Biphenyl, Naphthalin, Phenantren. Substituenten sind zum Beispiel $C_1$-$C_6$-Alkyl-, $C_1$-$C_6$-Alkoxy-, Carboxyl-, Amino- und Sulfonsäure-Gruppen. Verbundene Aromaten sind zum Beispiel Biphenyl oder durch Etherbrücken verbundene Aromaten (Arylenether).

Bevorzugte schwefelhaltige Polymere sind Polyarylensulfide, insbesondere Polyphenylensulfid.

Unter dem Begriff Präpolymer sind halogenterminierte Oligomere oder Polymere zusammengefaßt, die Arylensulfid-Einheiten enthalten. Diese Produkte haben gewöhnlich eine Molmasse, ausgedrückt als Zahlenmittel der Molmasse $M_n$, im Bereich von 500 bis 20000 g/mol. Sie lassen sich durch Reaktion einer Schwefelverbindung, insbesondere anorganischen Sulfiden, mit einem Überschuß an halogenierten aromafischen Kohlenwasserstoffen herstellen, zum Beispiel durch Reaktion von Natriumsulfid mit einem 5 bis 50 %-igen molaren Überschuß an p-Dichlorbenzol in NMP als Lösungsmittel. Sie können linear oder verzweigt sein. Auch ist es möglich durch Einsatz substituierter Dihalogenarylverbindungen (z.B. 2,5-Dichlortoluol) substituierte Präpolymere herzustellen. Die Präpolymere haben einen Halogengehalt an organisch gebundenem Halogen im Bereich von 0,2 bis 10 Gewichtsprozent; typischerweise liegt der Halogengehalt bei 0,5 bis 5 Gewichtsprozent, je nach Molmasse. Das Vorliegen halogenterminierter Oligomere oder Polymere wird experimentell belegt durch das Zahlenmittel ihrer Molmasse und dem Halogengehalt sowie durch ihre $^1$H-NMR-Spektren. Als Halogen-Endgruppe eignen sich die Halogene Fluor, Chlor, Brom und Iod, bevorzugt Chlor und Brom, besonders bevorzugt Chlor.

Als Schwefelverbindungen für die Herstellung des Präpolymeren und des Polymeren eignen sich organische und anorganische Sulfide. Anorganische Sulfide sind Sulfide der Alkali- und Erdalkali-Metalle, wie Lithiumsulfid, Kaliumsulfid, Calciumsulfid und bevorzugt Natriumsulfid. Ein organisches Sulfid ist zum Beispiel das Anlagerungsprodukt von Schwefelwasserstoff und 1,8-Diazabicyclo[5.4.0]undec-7-en (DBU). Es entsteht aus DBU und $H_2S$ im molaren Verhätnis 2:1. Die Salze können als solche zugegeben oder in situ erzeugt werden, so entsteht z. B. das bevorzugt eingesetzte Natriumsulfid aus Natriumhydrogensulfid und Natriumhydroxid. Die Sulfide können auch mit Kristallwasser eingesetzt werden. Es hat sich gezeigt, daß für die erste Stufe ca. 1 bis 1,8 mol Wasser pro mol Sulfid vorteilhaft ist.

Als halogenierte aromatische Kohlenwasserstoffe eignen sich Arylendihalogenide, unter anderem Dihalogenbenzole wie o-, m- und p-Dichlorbenzol, substituierte Dihalogenbenzole wie 2,5-Dichlortoluol, 3,5-Dichlorbenzoesäure, 2,5-Dichlorbenzolsulfonsäure oder 3,5-Dichlorbenzolsulfonsäure oder deren Salze. Aber auch Dihalogennaphthaline wie 1,4-Dibromnaphthalin oder Dihalogendiphenyläther wie 4,4'-Dichlordiphenyläther können eingesetzt werden. Ebenso können Gemische von verschiedenen Arylendihalogeniden eingesetzt werden. Es können auch kleine Mengen (0,2 bis 5 Molprozent bezogen auf Arylendihalogenid) polyhalogenierte aromatische Kohlenwasserstoffe eingesetzt werden, um zu verzweigten oder vernetzten schwefelhaltigen Polymeren zu gelangen.

Als Lösungsmittel für die Herstellung des Präpolymeren und des Polymeren in zweiter Stufe eignen sich dipolar aprotische Lösungsmittel vom Amidtyp wie Dimethylformamid (DMF), Dimethylacetamid (DMAc), N-Methylcaprolactam oder N-alkylierte Pyrrolidone oder Mischungen davon. Besonders bevorzugt ist NMP. Das Präpolymer ist unter den Reaktionsbedingungen der ersten und zweiten Verfahrensstufe gelöst.

Nach dem Verfahren gemäß der Erfindung liegt das Verhältnis von Laugenäquivalent zu Schwefeläquivalent bei der Herstellung der Präpolymeren im Bereich von 0,5 bis 1 zu 1, vorzugsweise 0,8 bis 1 zu 1. Dadurch ergeben sich eine Reihe von Vorteilen. Insbesondere wird die fest/flüssig-Trennung bei der Isolierung der Präpolymeren erheblich vereinfacht. Es entsteht nach Abschluß der Reaktion und Abkühlen der Reaktionsmischung eine fließfähige Suspension, die mit üblichen technischen Mitteln gefördert werden kann. Die fest/flüssig-Trennung der fließfähigen Suspension kann ohne vorbereitende Schritte wie Verdünnung direkt durch verfahrenstechnische Grundoperationen wie Dekantieren, Zentrifugieren, Filtrieren oder sofortige Entspannungsverdampfung des Lösemittels geschehen. Dagegen entstehen unter Verwendung eines Hydroxid-Überschusses häufig halbfeste bis stichfeste Feststoffkuchen. Der Austrag dieser Reaktionsgemische aus dem Reaktionsgefäß und das Eintragen in nachfolgende Apparate bereiten dann erhebliche Schwierigkeiten oder sind erst durch nachträgliche Verdünnung der ausreagierten Masse möglich, was wiederum die Trennprozesse insgesamt aufwendiger macht. Die Trennoperation selbst wird mit zunehmender Viskosität der Reaktionsmasse ebenfalls immer schwieriger und ineffektiver. Ausreagierte Suspensionen, die gemäß der vorliegenden Erfindung hergestellt werden, lassen sich erheblich schneller und effektiver in ihre festen und flüssigen Bestandteile trennen. Wird die fest/flüssig-Trennung beispielsweise mittels Filtration durchgeführt, so erhält man nach dem erfindungsgemäßen Verfahren deutlich höhere Filterleistungen.

Der Einsatz höchstens gleicher Laugenäquivalente bezogen auf Schwefeläquivalente verbessert außerdem die gezielte Herstellung von Präpolymeren mit Chlorendgruppen. Diese Chlorendgruppen sind im Fall der Herstellung von Präpolymeren für die weitere Aufkondensation erwünscht. Außerdem besitzen chlorterminierte Polymerketten die maximale Thermo- und Oxidationsstabilität.

Das Verfahren gemäß der Erfindung wird im folgenden am Beispiel der Herstellung von Polyphenylensulfid (PPS) beschrieben, ohne jedoch darauf beschränkt zu sein. Der Einsatz eines Titanautoklaven ist vorteilhaft, aber nicht zwingend.

Zur Herstellung des Präpolymers wird ein anorganisches Sulfid, bevorzugt ein Sulfid eines Alkalimetalls, besonders bevorzugt Natriumsulfid mit überschüssigem p-Dichlorbenzol (DCB) umgesetzt. Der Überschuß des DCB gegenüber Sulfid beträgt 5 mol% oder mehr, bevorzugt 10 bis 100 mol%, insbesondere 10 bis 50 mol%. Natriumsulfid wird wasserfrei oder in Form seiner kristallinen Hydrate eingesetzt. Es kann ebenfalls in situ aus Natriumhydroxid und Natriumhydrogensulfid hergestellt werden. Zur Herstellung eines Wertes von EQL/EQS im erfindungsgemäßen Bereich von 0,5 bis 1 stehen mehrere Möglichkeiten offen. So kann man beispielsweise Natriumhydrogensulfid im Überschuß gegenüber Natriumhydroxid einsetzen. Dann ergibt sich EQL/EQS einfach aus dem Quotient der molaren Konzentrationen [NaOH] / [NaSH].

Es ist auch möglich, Alkalisulfid mit einem Zusatz einer Protonensäure einzusetzen, beispielsweise Natriumsulfid mit 0-50 mol%, bevorzugt 0,5 bis 20 mol% einer Protonensäure EQL/EQS ergibt sich dann nach EQL/EQS = $[Na_2S]$-[Säure] / $[Na_2S]$. Geeignete Säuren sind anorganische Mineralsäuren wie Schwefelsäure, Salzsäure oder Phosphorsäure oder auch Carbonsäuren wie Essigsäure oder Propionsäure oder auch polyfunktionelle Carbonsäuren wie Weinsäure oder Zitronensäure. Aber auch andere protonensaure Substanzen lassen sich mit Vorteil einsetzen, beispielsweise $H_2S$.

Zur Einstellung des optimalen Wassergehalts der Reaktionsmischung von 1 bis 1,8 mol Wasser pro mol Sulfid kann vor der eigentlichen Reaktion eine destillative Entwässerung vorgenommen werden, um Hydratwasser von $Na_2S$, NaOH oder NaSH zu entfernen. Falls wasserfrweie Reaktanden eingestezt werden, kann die berechnete Wassermenge nachträglich zugesetzt werden. Die Zugabe der Reaktanden kann grundsätzlich absatzweise geschehen, indem Sulfid vorgelegt und entwässert wird; anschließend wird DCB zugegeben und auf die Reaktionstemperatur aufgeheizt. Es können aber auch beide Reaktanden langsam zudosiert werden, um eine dosierungskontrollierte Freisetzung der Reaktionswärme zu erreichen.

Die Reaktionsbedingungen für die erste Stufe können in weiten Grenzen variiert werden. So können die Reaktionstemperaturen zwischen 180 °C und 270 °C liegen, bevorzugt sind 220 bis 250 °C. Die Reaktionszeiten können 20 Minuten bis 20 Stunden betragen. Bevorzugt sind 1 bis 3 Stunden. Auch Temperaturprogramme können mit Vorteil verwendet werden, z.B. 30 Minuten bei 225°C und anschließend 1 Stunde bei 245 °C.

Die Aufarbeitung des Reaktionsgemisches der ersten Stufe kann auf verschiedene Weise erfolgen:

- Die Abtrennung des Präpolymeren kann durch Abkühlen des Reaktionsgemisches auf Temperaturen unterhalb von 200 °C und einfache Druckfiltration erfolgen. Der Filterkuchen enthält das Präpolymer und Natriumchlorid. Das Natriumchlorid läßt sich durch Waschen mit Wasser entfernen.
- Es ist auch möglich das Reaktionsgemisch in einer Entspannungsverdampfung oder Sprühtrocknung aufzuarbeiten. Dabei werden NMP und p-Dichlorbenzol entfernt. PPS und Natriumchlorid fallen als weitgehend trockenes Feststoffgemisch an, aus dem das Natriumchlorid ausgewaschen werden kann.
- Vorteilhaft ist auch eine Filtration der 220 bis 240 °C heißen Reaktionsmischung unter Druck, wobei das Kochsalz als Filterrückstand abgetrennt wird. Das Filtrat enthält das gelöste Präpolymer. Beim Abkühlen des Filtrates unter 200 °C kristallisiert das Präpolymer aus und kann dann leicht durch einfache Filtration (z.B. Vakuum-Filtration) abgetrennt werden. Das abfiltrierte Lösemittel kann zur Herstellung von Präpolymer wiederverwendet werden.

Zur Herstellung des Polymers wird das Präpolymer in NMP unter Druck bei Temperaturen von 230 °C gelöst und in homogener Lösung mit Natriumsulfid umgesetzt. Die Konzentration des Präpolymeren liegt dabei zweckmäßigerweise möglichst hoch. Sie kann im Bereich von 15 bis 90 Gewichtsprozent liegen, bevorzugt von 20 bis 60 Gewichtsprozent, insbesondere von 30 bis 50 Gewichtsprozent. Die Menge an zugesetztem Natriumsulfid bestimmt die Molmasse der Polymere. Trägt man die Molmasse als Funktion des Massenverhältnisses von Natriumsulfid/Präpolymer auf, so ergibt sich ein ausgeprägtes Maximum bei einem Verhältnis von Natriumsulfid/Präpolymer, das folgender Gleichung folgt:

$$m (Na_2S) = m (PP) \times P_{Cl} .$$

Hierbei bedeuten:

$m (Na_2S)$:     Masse des zugesetzten Natriumsulfids (wasserfrei)
$m (PP)$:     Masse des eingesetzten Präpolymeren
$P_{Cl}$:     Gewichtsanteil organisch gebundenen Chlors im Präpolymeren, das heißt Massenverhältnis gebundenes Chlor/Präpolymer (z.B.: 2 Gewichtsprozent = 0,02)

Für typische Präpolymere mit einem Gehalt organisch gebundenen Chlors im Bereich von 0,2 bis 10 Gew.-%, bevorzugt 0,5 bis 5 mol% beträgt die berechnete Menge an Natriumsulfid für die Herstellung des Polymers nur wenige Gew.-%. Unter den Reaktionsbedingungen ist sowohl das Präpolymer als auch das Polymer homogen im Lösungsmittel gelöst. Natriumsulfid-hydrat ist in den kleinen Konzentrationen unter den Reaktionsbedingungen ebenfalls weitgehend löslich. Die Reaktion geschieht deshalb praktisch in homogener Lösung durch Umsetzung zweier homogen gelöster Reaktionspartner. Eine Separation der Reaktionsmischung in zwei Phasen ist nicht erwünscht und für eine schnelle und vollständige Umsetzung der Reaktionspartner nicht vorteilhaft. Lediglich das im Laufe der Umsetzung von halogenterminierten Präpolymeren zu dem polymeren Endprodukt entstehende Natriumchlorid ist im Lösungsmittel unlöslich. In jedem Fall beträgt aber der Anteil dieser einzigen in der Reaktionsmischung ungelöst als Feststoff vorliegenden Komponente höchstens 10 Gew.-%, bezogen auf die Gesamtmasse des Ansatzes.

Die Reaktionstemperaturen liegen in der zweiten Stufe bei 220 bis 260 °C, bevorzugt bei 230 bis 255 °C und die Reaktionszeiten betragen 30 Minuten bis 5 Stunden, bevorzugt 1 bis 3 Stunden. Am Ende der Reaktion liegt das Polymere in Form einer fast klaren, viskosen Lösung vor, aus der es beim Abkühlen auskristallisiert. Das auskristallisierte PPS kann durch einfache Filtration leicht isoliert werden. Durch Waschen mit etwas NMP läßt es sich von Mutterlaugenresten befreien. Nach dem Waschen mit warmem Wasser wird das Polymere getrocknet.

Die Schmelzpunkte der Polyphenylensulfide liegen im Bereich von 270 °C bis 305 °C, typisch sind 280 bis 295 °C. Die Schmelzviskosität liegt im Bereich von 5000 bis 500000 mPas (centiPoise), bevorzugt bei 50000 bis 250000 mPas (centiPoise). Die Schmelzeviskosität ist ohne Zusätze stabil: Bei 300 °C verändert sie sich über einen Zeitraum von 1 Stunde um weniger als 10%.

Die gemäß der Erfindung hergestellten aromatischen schwefelhaltigen Polymere lassen sich durch Schmelzextrusion zu Formkörpern verarbeiten. Aber auch Folien und Fasern mit guten mechanischen Eigenschaften lassen sich herstellen.

Beispiele

Beispiel 1 (Vergleichsbeispiel)

In einem 2 l-Titanautoklaven werden 850 ml NMP, 30 ml Wasser, 256 g Natriumsulfid-2,8-Hydrat (2 mol) und 0,8 g Natriumhydroxid (0,02 mol) vorgelegt. Das Verhältnis von Laugenäquivalent (EQL) zu Schwefeläquivalent (EQS) beträgt 1,01. Die Mischung wird unter Rühren bis auf T = 190°C erhitzt und dann 145 ml NMP-haltiges Wasser abdestilliert. Zu der auf T = 170°C abgekühlten Mischung werden 370 g p-Dichlorbenzol und 50 ml NMP gegeben. Der Autoklaveninhalt wird unter Rühren auf T = 230°C erhitzt und dort 2 Stunden lang gehalten. Dann werden 55 ml eines Wasser/NMP-Gemisches sowie 18 ml p-Dichlorbenzol abdestilliert. Die Temperatur wird auf T = 185°C gesenkt und dort für 90 Minuten gehalten. Anschließend wird der Autoklav geöffnet. Man erhält eine sehr hochviskose Reaktionsmasse, die nicht leicht aus dem Reaktionsgefäß herausfließt. Ein Versuch, das kristalline Präpolymer sowie das Natriumchlorid durch Filtration von der anhaftenden Mutterlauge zu trennen, schlägt fehl, weil die Filterleistung extrem klein ist. Der Ansatz wird schließlich in 4 l Aceton eingerührt und erst dann eine Filtration durchgeführt. Anschließend wird noch einmal mit Aceton und dreimal mit heißem Wasser gewaschen. Das getrocknete Präpolymer wird durch Auflösen in 85 prozentiger (Gew.-%) Salpetersäure quantitativ zum Polyphenylensulfoxid oxidiert und danach NMR-spektroskopisch charakterisiert. Man beobachtet ein breites Singulett bei 7,4 ppm, welches von den 1,4-Sulfoxid-disubstituierten Phenylenringen der Polymerkette stammt. Dagegen fehlen die für chlorterminierte Präpolymere charakteristischen beiden Dubletts bei 7,15 ppm und 7,05 ppm der endständigen Phenylenringe mit 1-Chlor-4-Sulfoxid-Substitutionsmuster. (Die genaue chemische Verschiebung hängt von der exakten Säurestärke der $HNO_3$ ab. Deren Signal wird bei $\delta$ = 9,1 ppm festgelegt.)

Beispiel 2

In einem 2 l-Titanautoklaven werden 850 ml NMP, 30 ml Wasser und 256 g Natriumsulfid-2,8-Hydrat (2 mol) vorgelegt. Die Mischung wird unter Rühren bis auf T = 195°C erhitzt und dann 145 ml NMP-haltiges Wasser abdestilliert. Zu dem auf T = 170°C abgekühlten Autoklaveninhalt wird eine Mischung aus 367 g p-Dichlorbenzol, 50 ml NMP sowie 1,2 g Eisessig (0,02 mol) gegeben. Das Verhältnis von Laugenäquivalent (EQL) zu Schwefeläquivalent (EQS) beträgt 0,99. Der Autoklav wird auf T = 230°C erhitzt und dort 2 Stunden lang gehalten. Dann werden 27 ml eines Wasser/NMP-Gemisches sowie 18 ml p-Dichlorbenzol abdestilliert. Die Temperatur wird auf T = 185°C gesenkt und dort für 90 Minuten gehalten. Anschließend wird der Autoklav geöffnet. Die gut fließfähige Suspension wird in einen Büchner-Trichter gegossen und über ein Cellulosefilter filtriert. Die normierte Filterleistung beträgt 160 l/m$^2$h, bezogen auf das Filtratvolumen. Der Filterkuchen wird mit Aceton und dreimal mit heißem Wasser gewaschen und anschließend getrocknet. Das NMR-Spektrum des zum Sulfoxid oxidierten PPS-Präpolymerprodukts zeigt neben dem Hauptpeak bei 7,40 ppm die beiden für Chlorendgruppen charakteristischen Dubletts bei 7,15 ppm und 7,05 ppm. Aus dem Intensitätsverhältnis des Hauptpeaks zu den Dubletts wird die mittlere Molmasse des Präpolymers zu $M_n$ = 5800 g/mol bestimmt.

Beispiel 3

In einem 2 l-Titanautoklaven werden 850 ml NMP, 30 ml Wasser und 307 g Natriumsulfid-2,8-Hydrat (2,4 mol) vorgelegt. Die Mischung wird unter Rühren bis auf T = 200°C erhitzt und dann 162 ml NMP-haltiges Wasser abdestilliert. Zu dem auf T = 170°C abgekühlten Inhalt des Autoklaven werden 440 g p-Dichlorbenzol und 50 ml NMP gegeben. In diesem Versuch beträgt das Verhältnis von Laugenäquivalent (EQL) zu Schwefeläquivalent (EQS) 1,0. Das Reaktionsgemisch wird unter fortwährendem Rühren auf T = 230°C erhitzt und die Reaktion 2 Stunden bei dieser Temperatur geführt. Dann werden 30 ml eines Wasser/NMP-Gemisches sowie 19 ml p-Dichlorbenzol abdestilliert. Die Temperatur wird auf T = 185°C gesenkt und dort für 90 Minuten gehalten. Anschließend wird der Autoklav geöffnet. Die fließfähige Suspension wird über ein Cellulosefilter bei T = 185°C filtriert. Die auf das Filtratvolumen bezogene Filterleistung ist 190 l/m$^2$h. Der Filterkuchen wird mit Aceton und dreimal mit heißem Wasser gewaschen und anschließend getrocknet. Das NMR-Spektrum des zum Sulfoxid oxidierten PPS-Präpolymerprodukts zeigt neben dem Hauptpeak bei 7,40 ppm die beiden für Chlorendgruppen charakteristischen Dubletts bei 7,15 ppm und 7,05 ppm. Aus dem Intensitätsverhältnis des Hauptpeaks zu den Dubletts wird die mittlere Molmasse des Präpolymers zu $M_n$ = 6200 g/mol bestimmt.

Beispiel 4

In einem 2 l-Titanautoklaven werden 850 ml NMP, 30 ml Wasser und 256 g Natriumsulfid-2,8-Hydrat (2 mol) vorgelegt. Die Mischung wird unter Rühren bis auf T = 200°C erhitzt und dann 174 ml NMP-haltiges Wasser abdestilliert. Zu der auf T = 180°C abgekühlten Mischung werden 367 g p-Dichlorbenzol, 50 ml NMP und 6 g Eisessig (0,10 mol) gegeben. In diesem Versuch beträgt das Verhältnis von Laugenäquivalent (EQL) zu Schwefeläquivalent (EQS) 0,95. Der Autoklav wird unter Rühren auf T = 230°C erhitzt und die Reaktion 2 Stunden bei dieser Temperatur geführt. Dann werden 37 ml eines Wasser/NMP-Gemisches sowie 58 ml p-Dichlorbenzol abdestilliert. Die Temperatur wird auf T = 175°C gesenkt und dort für 90 Minuten gehalten. Anschließend wird der Autoklav geöffnet. Die leicht fließfähige Suspension wird über ein Cellulosefilter bei T = 175°C filtriert. Die auf das Filtratvolumen bezogene Filterleistung ist 470 l/m$^2$h. Der Filterkuchen wird mit Aceton und dreimal mit heißem Wasser gewaschen und anschließend getrocknet. Das NMR-Spektrum des zum Sulfoxid oxidierten PPS-Präpolymerprodukts zeigt neben dem Hauptpeak bei 7,40 ppm die beiden für Chlorendgruppen charakteristischen Dubletts bei 7,15 ppm und 7,05 ppm. Aus dem Intensitätsverhältnis des Hauptpeaks zu den Dubletts wird die mittlere Molmasse des Präpolymers zu $M_n$ = 6200 g/mol bestimmt.

Beispiel 5

Herstellung von hochmolekularem PPS:

31,2 g Präpolymer aus Beispiel 2 werden in einem 250 ml-Glasautoklaven unter Rühren in 60 ml NMP suspendiert und mit 0,63 g $Na_2S$ x 3 $H_2O$, 1,15 g Natriumacetat und 0,5 ml $H_2O$ unter Luftabschluß versetzt. Anschließend wird unter Rühren für 2 Stunden auf 245 °C erwärmt. Die weitgehend homogene, viskose Lösung wird abgekühlt und mit 40 ml NMP verdünnt. Der kristalline Niederschlag wird abgesaugt, mit NMP gewaschen und in Wasser kurz aufgekocht. Nach dem Absaugen wird das Polymere getrocknet.

Ausbeute: 95%.

Das PPS hat eine Schmelzeviskosität von 177000 mPas bei 300 °C und einer Scherrate von 10 min$^{-1}$. Nach einer Stunde bei 300 °C beträgt sie 172000 mPas. Der Schmelzpunkt beim 1. Aufheizen liegt bei 293 °C, die Rekristallisationstemperatur beim Abkühlen aus der Schmelze bei 246 °C und der Schmelzpunkt beim 2. Aufheizen liegt bei 285 °C.

**Patentansprüche**

1. Verfahren zur Herstellung eines aromatischen schwefelhaltigen Polymeren, dadurch gekennzeichnet, daß in einem ersten Schritt in mindestens einem Lösungsmittel ein Präpolymer aus A) mindestens einem aromatischen dihalogenierten Kohlenwasserstoff und B) mindestens einem Sulfid eines Alkali- oder Erdalkalimetalls oder dessen Hydraten hergestellt wird, das halogenterminierte Gruppen enthält, wobei in dem Reaktionsgemisch ein Verhältnis von Laugenäquivalent zu Schwefeläquivalent von 0,5 bis 1 zu 1 besteht, das Präpolymere isoliert wird und in einem zweiten Schritt unter Zugabe einer geringen Menge der Komponente B) in homogener Lösung das Polymer gebildet wird.

2. Verfahren nach Anspruch 1, dadurch gekennzeichnet, daß das aromatische schwefelhaltige Polymer Arylensulfid-Einheiten enthält, vorzugsweise ein Polyarylensulfid und insbesondere Polyphenylensulfid ist.

3. Verfahren nach Anspruch 1 oder 2, dadurch gekennzeichnet, daß das Präpolymere ein Gehalt an organisch gebundenem Halogen von 0,2 bis 10 Gew.-%, vorzugsweise 0,5 bis 5 Gew.-% aufweist.

4. Verfahren nach einem oder mehreren der Ansprüche 1 bis 3, dadurch gekennzeichnet, daß die Molmasse $M_n$ des Präpolymers 500 bis 20000 g/mol beträgt.

5. Verfahren nach einem oder mehreren der Ansprüche 1 bis 4, dadurch gekennzeichnet, daß die Komponente A) Dichlorbenzol oder Dichlorbenzylsulfonsäure und die Komponente B) Natriumsulfid ist.

6. Verfahren nach einem oder mehreren der Ansprüche 1 bis 5, dadurch gekennzeichnet, daß als Lösungsmittel dipolar aprotische Verbindungen vom Amidtyp, vorzugsweise N-Methylpyrrolidon eingesetzt werden.

7. Verfahren nach einem oder mehreren der Ansprüche 1 bis 6, dadurch gekennzeichnet, daß bei der Herstellung des Präpolymeren die Komponente A) in einem Überschuß von 5 mol% oder mehr, vorzugsweise 10 bis 100 mol% und insbesondere 10 bis 50 mol% gegenüber der Komponente B) eingesetzt wird.

8. Verfahren nach einem oder mehreren der Ansprüche 1 bis 7, dadurch gekennzeichnet, daß die Konzentration das Präpolymeren in der zweiten Stufe 15 bis 90 Gew.-%, vorzugsweise 20 bis 60 Gew.-% und insbesondere 30 bis 50 Gew.-% beträgt.

9. Verfahren nach einem oder mehreren der Ansprüche 1 bis 8, dadurch gekennzeichnet, daß sich die Zugabe der Komponente B) in der zweiten Stufe aus der folgenden Gleichung ergibt

$$m\,(Na_2S) = m\,(PP) \times P_{Cl}\,.$$

worin

m (Na$_2$S): die Masse der Komponente B) (wasserfrei),
m (PP): die Masse des eingesetzten Präpolymeren und
P$_{Cl}$: der Gewichtsanteil des organisch gebundenen Halogens im Präpolymeren bedeuten.

10. Polyarylensulfid, hergestellt nach dem Verfahren gemäß einem oder mehreren der Ansprüche 1 bis 9.

11. Polyarylensulfid nach Anspruch 10, dadurch gekennzeichnet, daß es eine Schmelzviskosität von 5 000 bis 500 000 mPas (centiPoise), vorzugsweise 50 000 bis 250 000 und ein Zahlenmittel der Molmasse $M_n$ von 5 000 bis 100 000 g/mol aufweist.

12. Verwendung des aromatischen schwefelhaltigen Polymeren, hergestellt nach einem oder mehreren der Ansprüche 1 bis 9 zur Herstellung von Formkörpern, Folien und Fasern.